Europäisches Patentamt

European Patent Office

Office européen des brevets

(11) Publication number: **0 170 239**
**B1**

# EUROPEAN PATENT SPECIFICATION

(45) Date of publication of patent specification: **27.09.89**

(51) Int. Cl.⁴: **B 65 G 53/46**

(21) Application number: **85109496.1**

(22) Date of filing: **28.07.85**

(54) **Vertical rotary valve.**

(30) Priority: **30.07.84 JP 160075/84**

(43) Date of publication of application:
**05.02.86 Bulletin 86/06**

(45) Publication of the grant of the patent:
**27.09.89 Bulletin 89/39**

(84) Designated Contracting States:
**DE FR GB NL**

(56) References cited:
**DE-A-2 606 483**
**FR-A-2 419 241**

(73) Proprietor: **KIKKOMAN CORPORATION**
**339 Noda**
**Noda-shi Chiba (JP)**

(72) Inventor: **Kiuchi, Michio**
**1523-4, Yamazaki**
**Noda-shi Chiba (JP)**
Inventor: **Akao, Takeshi**
**177-1, Wakamatsu**
**Abiko-shi Chiba (JP)**

(74) Representative: **Lippert, Hans, Dipl.-Ing. et al**
**Reichel und Reichel Parkstrasse 13**
**D-6000 Frankfurt (Main) 1 (DE)**

# Description

The present invention generally relates to a rotary valve adapted to be installed in a line for supply and transfer such as of a powder or granular substance or grain material. More particularly, the invention relates to a rotary valve of a vertical type to be installed in such a line.

There are known rotary valves of vertical type adapted to be employed for material supply and transfer in such a line that transfers a powder or granular substance or grain material with a pressure difference thereacross.

Such known vertical rotary valves are generally constituted with a stationary valve housing having at the top thereof a material feed port and at the bottom thereof a material discharge port, a rotary drive shaft vertically arranged through the central part of the valve housing, and a rotor housed in the valve housing and fixed on the rotary drive shaft. The rotor includes a plurality of material accommodation chambers each respectively opened upwardly and downwardly and adapted to receive a volume of material, when put in a position where an upper opening thereof is coincident with the material feed port, and discharge same, when put in another position where a lower opening thereof is coincident with the material discharge port.

As abovementioned, across such a vertical rotary valve, there is necessarily provided a pressure difference between a line section at the material feed port side of the rotary valve and another line section at the material discharge port side thereof. To maintain such a pressure difference, the rotor is needed to be kept air-tight against the valve housing.

In this respect, even when such a pressure difference is slight, a failure to keep the air-tightness between the rotor and the valve housing may cause the material as once received in any material accommodation chamber to partially leak out to an internal chamber of the valve housing or to the material feed port before the discharge through the material discharge port, while such leakage is unfavorable.

In the use of such a vertical rotary valve, therefore, it constitutes a prerequisite to keep the air-tightness between the rotor and the valve housing, or more particularly, to keep, of such ones of the material accommodation chambers of the rotor as put in positions where the upper or lower opening overlap with neither the material feed port nor the material discharge port of the valve housing, the openings thereof all air-tight against the valve housing.

As a vertical rotary valve of such known type, there is one disclosed in Japanese Patent Lay-Open Print No. 52-16769, laid open on February 8, 1977, and another in Japanese Patent Lay-Open Print No. 52-123068, laid open on October 15, 1977.

The vertical rotary valve disclosed in the former Lay-Open Print includes, in a cylindrical valve housing, a cylindrical rotor of a smaller diameter, the rotor having a plurality of material accommodation chambers each respectively opened upwardly and downwardly and fan-shaped in the section thereof. Between an upper base portion of the rotor and an upper base portion of the housing is placed an interplate, which is pressed against the rotor with bolts provided at the side of the upper base portion of the housing. Moreover, between the circumferential part as well as the central part of the upper base portion of the rotor and the interplate and between the circumferential part as well as the central part of a lower base portion of the rotor and a lower base portion of the housing are each respectively interposed an abrasion-resistant ring-like seal member.

The constitution of the vertical rotary valve by the latter, that is, according to the Japanese Patent Lay-Open Print No. 52-123068 is, though substantially analogous to, different in some points from that of the vertical rotary valve according to the Japanese Patent Lay-Open Print No. 52-16769; the difference exemplarily residing in that a valve housing consists of upper and lower halves fitted either in the other and that no interplate is placed between the upper half of the housing and a rotor. In this respect, in the Japanese Patent Lay-Open Print No. 52-123068 also, between the upper half of the housing and the rotor is interposed a ring-like seal member, while the rotor is pressed by, to be held between, the upper and lower halves of the housing.

As will be apparent from the foregoing description, also in either of the vertical rotary valves according to the Japanese Patent Lay-Open Print Nos. 52-16769 and 52-123068, a device is imparted to keep, though to a certain degree, the air-tightness between the rotor and the valve housing.

In both of them, however, the seal member is of a ring-like form relatively small in the width, thus being small of the sealing surface area, so that the load pressure per unit area acting on the seal member is large. Therefore, also the abrasion of the seal member due to rotation of the rotor is large, thus lowering the durability of the seal member. In addition thereto, the ring-like seal member is inherently low in the resistance to pressure and hence, even when an attempt is made to exert a larger pushing force between the upper and lower halves of the valve housing to thereby raise the air-tightness, the magnitude of such pushing force is limited in itself.

Moreover, although in the vertical rotary valve according to the Japanese Patent Lay-Open Print No. 52-123068 an O-ring for air-tight sealing is provided at the fitted part between the upper and lower halves of the valve housing, the sealing effect thereby obtainable is insufficient.

In respect of such problems of a seal member as described above, with an object to solve same, still another vertical rotary valve is already proposed by Japanese Patent Lay-Open Print No. 55-38254, laid open on March 17, 1980.

The vertical rotary valve according to this Lay-Open Print, though substantially analogous in the constitution to that of the vertical rotary valve by the Japanese Patent Lay-Open Print No. 52-123068, has a friction plate and a cushion plate combined with each other to be interposed between an upper base portion of a rotor and an upper half portion of a valve housing, as well as between a lower base portion of the rotor and a lower half portion of the valve housing.

According to this constitution, in which the friction plate is formed as a seal member to be larger in the sealing surface area than ring-like one, the load pressure per unit area acting on the friction plate is reduced. Therefore, also the abrasion of the friction plate due to rotation of the rotor is made relatively small, thus raising the durability thereof to some extent.

However, due to the reduction in the load pressure per unit area of the friction plate, instead of a rise of the durability thereof, also the air-tightness is reduced between the friction plate as placed above or below the rotor and an upper or lower opening of each material accommodation chamber of the rotor, respectively. This is because the rotor is pushed to be held, through upper and lower combinations of the friction and cushion plates, by and between the upper and lower half portions themselves of the valve housing.

Further, also in the vertical rotary valve according to the Japanese Patent Lay-Open Print No. 55-38254, such a conventional problem is left intact as concerned with the sealing to be air-tight between the upper and lower half portions of the valve housing.

Furthermore, in all of three vertical rotary valves according to the aforementioned Japanese Patent Lay-Open Prints, the rotor is shaped in a cylindrical form and has plural material accommodation chambers of a fan-like section. Accordingly, also the material feed port as well as the material discharge port is shaped in a sectorial form in the section thereof, which is unfavorable as an aperture configuration of a valve adapted to be installed in a material transfer line, there being the fear that material streams may be unevenly distributed in the section.

Still more, in order to define the material accommodation chambers in such a form as above-mentioned, the rotor is necessarily provided with a plurality of rectangular plates radially extending from the central part thereof through which the rotary drive shaft is provided.

In this respect, concerning the sealing to be air-tight between the valve housing and the upper and lower ends of each of the rectangular plates, no consideration is provided in the Japanese Patent Lay-Open Print Nos. 52-16769 and 52-123068. In the Japanese Patent Lay-Open Print No. 55-38254, though provided with a certain consideration, the sealing between the valve housing and the rectangular plates is insufficient in the air-tightness because of the reduced load pressure per unit area acting on the friction plate between the rotor and the housing.

Yet more, not limiting to the aforementioned three vertical rotary valves, in any known rotary valve of the vertical type, respective material accommodation chambers of the rotor are adapted to let the material, as it is once received therein, drop by its own weight from the material discharge port of the valve housing into a line section at the discharge side.

As a result, depending on the inner pressure of the discharge side line section, the material may be impeded in the falling from the material accommodation chambers of the rotor into the discharge side line section.

A vertical rotary valve according to the prior art portion of claim 1 is known from FR-A-2 419 241. In this vertical rotary valve ring-like sealing packings are provided between the upper surface of the rotor and the lower surface of an upper housing wall as well as between the lower surface of the rotor and the upper surface of a lower housing wall. The respective surfaces of the upper and lower housing walls have ring-like grooves that accomodate the sealing packings. In a preferred embodiment each sealing packing consists of a ring-like spring member on the bottom of the associated groove and an elastic sealing member pressed by the spring member against the surface of the rotor with bolts provided between a circumferential cylindrical wall portion of the housing and the outer rim portions of the upper and lower housing walls.

The ring-like sealing packings used in the vertical rotary valve disclosed in FR-A-2 419 241 are similar to those used in the vertical rotary valves disclosed in JP-A-52-16769 and, accordingly, are principally connected with similar shortcomings as mentioned above.

The invention as claimed is intended to remedy the drawbacks of prior art vertical rotary valve. It solves the problem of how to design a vertical rotary valve which has an increased degree of air-tight sealability between the valve housing and the rotor, while raising the durability of the sealing therebetween.

The invention comprising the idea of incorporating upper and lower planar seals between the valve housing and the rotor with the upper seal being pressed against the upper surface of the rotor by means of a plurality of pusher mechanisms as defined results in a decrease in the abrasion and rise of the durability of the planar seals, while permitting the seals to be pressed against the rotor surfaces with higher forces, thus avoiding unfavourable leakage. All in all, the operation performance of the vertical rotary valve is substantially increased.

The above and further features, objects and advantages of the present invention will more fully appear from the following detailed description of a preferred embodiment of the invention when same is read in conjunction with the accompanying drawings.

In the drawings:

Fig. 1 is a half-cut, partially quarter cutaway, longitudinal sectional view of a vertical rotary valve according to the preferred embodiment of the present invention;

Figs. 2 and 3 are top and bottom views of the rotary valve shown in Fig. 1, respectively;

Fig. 4 is an enlarged sectional view taken along line IV-IV of Fig. 3;

Fig. 5 is a sectional view taken along line V-V of Fig. 1;

Fig. 6 is an exploded view of a rotor of the rotary valve;

Fig. 7 is a sectional view showing a modified example of a plate-like seal member of the rotary valve;

Fig. 8 is a partial sectional view showing a modified example of a pushing mechanism for the seal member of the rotary valve;

Figs. 9 and 10 are sectional views showing examples of a vibration absorbing mechanism, respectively;

Fig. 11 shows an example of application of the vertical rotary valve according to the present invention;

Fig. 12 is a longitudinal sectional view of a vertical rotary valve according to a modified example of the embodiment of the present invention;

Figs. 13 and 14 are top and bottom views of the rotary valve shown in Fig. 12, respectively;

Fig. 15 shows an example of application of the rotary valve shown in Fig. 12; and

Figs. 16 and 17 are sectional views showing modified examples of a heating medium entrance port of the rotary valve shown in Fig. 12.

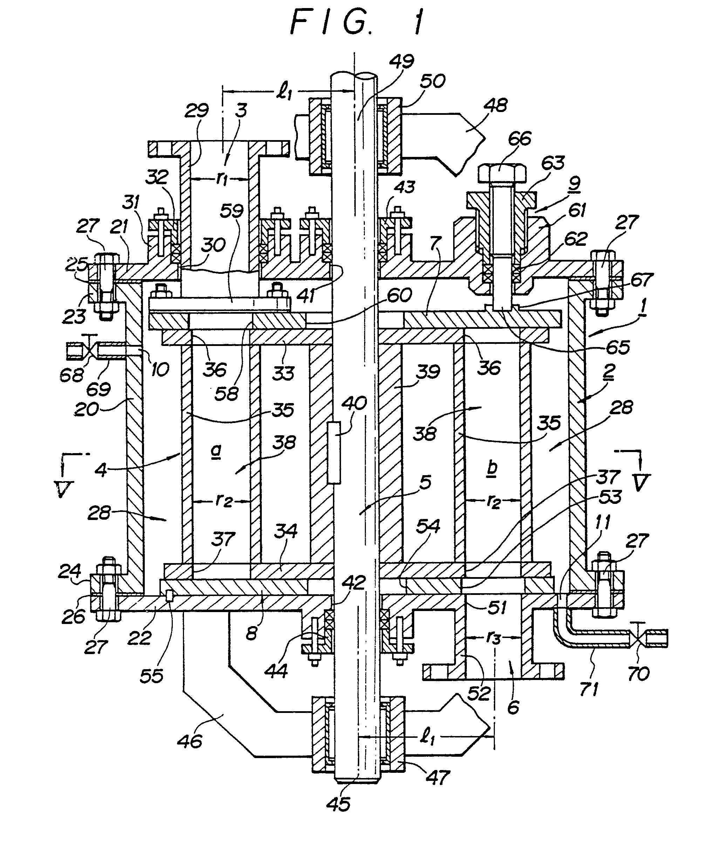

Referring first to Fig. 1, designated at reference numeral 1 is a vertical rotary valve according to the preferred embodiment of the present invention, the rotary valve 1 comprising a cylindrical valve housing 2 and a rotor 4 arranged in the housing 2.

The valve housing 2 comprises a cylindrical body 20, and an upper cover 21 and a lower cover 22 covering the body 20 from above and below, respectively. The body 20 has at the upper and lower ends thereof, along the circumferences thereof, upper and lower flange portions 23, 24 radially outwardly projected therefrom, respectively, which flange portions 23, 24 are fastened to the circumferential parts of the upper and lower covers 21, 22, with gaskets 25, 26 put therebetween, respectively, by means of bolts 27 and nuts, so that a fully enclosed interior chamber 28 is defined in the housing 2.

The upper cover 21 has in a part near the circumference thereof an opening 30 formed therethrough for vertically fitting therein a tubular member 29 which defines a material feed port 3. Around the opening 30, the upper cover 21 is formed with an annular projection 31 standing thereon as a stuffing box, and for the air-tightness to be kept between the tubular member 29 and the opening 30 there is interposed a packing assembly 32 consisting of a gland packing and a packing gland.

In the interior chamber 28 of the valve housing 2 is provided a rotor 4 as a valve body, which rotor 4 comprises upper and lower disc-like base plates 33, 34, and a plurality of (six in this embodiment) tubular bodies 35 vertically arranged therebetween in an equi-angularly spacing manner and located radially near to the circumference of the rotor 4. The upper and lower base plates 33, 34 have formed therethrough a set of upper openings 36 and a set of lower openings 37, respectively, the openings 36, 37 being the same in the number as the tubular bodies 35, respectively, and communicating each respectively with the interior of one of the tubular bodies 35, so that a number of material accommodation chambers 38 same as the tubular bodies 35 are given each respectively by the combination of the interior of one of the tubular bodies 35 and corresponding ones of the openings 36, 37. The rotor 4 is fixed, by means of a tubular holder 39 and a key 40, on a drive shaft 5 vertically arranged so as to stretch through the respective central parts of the upper and lower base plates 33, 34, or more particularly, as to extend, outwardly of the upper and lower base plates 33, 34, passing respective through-holes 41, 42 formed in the central parts of the base plates 33, 34. Incidentally, in Fig. 1, designated at reference numeral 43, 44 are upper and lower packing assemblies for sealing the drive shaft 5 in an air-tight manner at the through-holes 41, 42, the packing assemblies 43, 44 each respectively consisting of a gland packing and a packing gland.

The drive shaft 5 is operatively connected for the rotational driving thereof, through an unshown upper end portion thereof, to a motor 15, as later described, and is rotatably supported at a lower end portion 45 thereof through a bearing 47 by a lower cross stay 46 provided on the lower cover 22 of the valve housing 2 and at a middle part 49 of the upper extension thereof through another bearing 50 by an upper cross stay 48 provided on the upper cover 21 of the housing 2. By the shaft 5 with such arrangement, the rotor 4 is adapted to be driven to rotate in the housing 2.

The tubular bodies 35 are arranged as shown in Fig. 5, that is, so disposed with respect to the axis O1 of the drive shaft 5 as to have the axes O2 thereof radially displaced to be located at a distance l1 therefrom and circumferentialwise spaced apart at intervals of an angle $\theta_1$. In this respect, in this embodiment in which the tubular bodies 35 are six in the number, the angle $\theta_1$ is equal to 60°. In other words, the tubular bodies 35 are arranged, radially, equi-distantly and, circumferentially, equi-angularly spacedly with respect to the drive shaft 5.

The lower cover 22 has in a part near the circumference thereof an opening 51 formed therethrough, around which the downside of the cover 22 is downwardly projected to provide a tubular extension 52 defining therein a material discharge port 6. The material discharge port 6 is located at an angularly displaced position from the material feed port 3 with respect to the drive shaft 5 or, in this embodiment, at a position of 180° from the port 3 about the shaft 5. Namely, the material discharge port 6 is intentionally displaced to be different in the horizontal position from the material feed port 3.

In this respect, the longitudinal sectional view shown in Fig. 1 is given, for the conveniency of explanation, as the combination of a quarter-cutaway section of such a part of the vertical rotary valve 1 that is found above the upper base plate 33 of the rotor 4 and a half-cutaway section of the remaining part thereof.

In this embodiment, in which the material feed port 3 and the material discharge port 6 are angularly displaced at 180° from each other with respect to the drive shaft 5, when any of the tubular bodies 35 has the material accommodation chamber 38 thereof brought into a position a thereof coincident with the material feed port 3, the material accommodation chamber 38 of that one of the tubular bodies 35 which is disposed at the opposite side to that tubular body 35 with respect to the shaft 5 is located at a position b thereof coincident with the material discharge port 6. As a matter of course, none of the tubular bodies 35 is adapted to have the material accommodation chamber 38 thereof so located as to simultaneously communicate with both the material feed and discharge ports 3, 6.

The material feed port 3 and the material discharge port 6 as well as the material accommodation chambers 38 are all shaped circular in the section thereof, such that relative to the inside diameter r1 of the feed port 3 that r2 of each accommodation chamber 38 is substantially equal as well as to that r3 of the discharge port 6. Moreover, the feed and discharge ports 3, 6 have the axes thereof disposed each respectively at the distance l1 from the axis O1 of the drive shaft 5, so that each time when any of the tubular bodies 35 is carried into the position a or b, the axis O2 of the accommodation chamber 38 in this tubular body 35 becomes substantially coincident with the axis of the feed port 3 or that of the discharge port 6, respectively.

On the upside of the upper base plate 33 of the rotor 4 and on the downside of the lower base plate 34 thereof, there are provided upper and lower circular seal plates 7 and 8, respectively. The lower seal plate 8 is placed on the lower cover 22 of the valve housing 2 and kept in slidable contact at the upside thereof with the downside of the lower base plate 34 of the rotor 4 which is pressed thereagainst with a controllable force. In the lower seal plate 8, at a part thereof corresponding to the material discharge port 6 is formed a communication hole 53 for passing the material to be discharged and at the central part thereof is opened a through hole 54 for inserting the drive shaft 5. Incidentally, in Fig. 1, designated at reference numeral 55 a rotation checking stopper for fixing the lower seal plate 8 to the lower cover 22 of the valve housing 2 in a level adjustable manner.

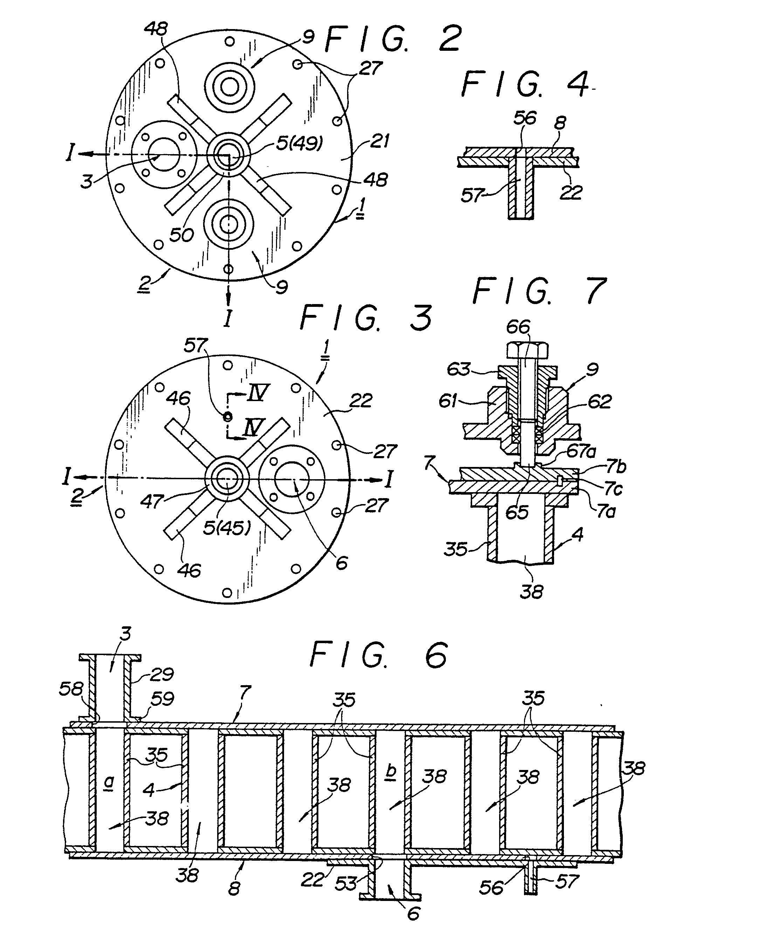

Moreover, in the lower base plate 8, there is opened a gas vent hole 56 at a position angularly displaced to be phase-delayed, with respect to the rotation of the rotor 4, from the communication hole 53 communicating with the material discharge port 6; for example, in such a part of the base plate 8 as projected toward an observer in front of Fig. 1 when supposing that the direction of rotation of the rotor 4 as operated should be clockwise for another observer viewing from above thereof. In other words, as seen from Fig. 4, the gas vent hole 56 of the lower seal plate 8 is provided at a point thereon where, any time when one of the tubular bodies 35 has the material accommodation chamber 38 thereof put in communication with the material discharge port 6, the vent hole 56 is kept from communicating with this accommodation chamber 38. In this embodiment, the gas vent hole 56 is located at a point circumferentially displaced to be phase-delayed, from the material discharge port 6, at an angle of 90° about the drive shaft 5.

Further, at a position coincident with the gas vent hole 56, the lower seal plate 8 is provided with a gas vent tube 57 communicating with the atmosphere.

Accordingly, when fixing an eye upon one of the tubular bodies 35, the material accommodation chamber 38 thereof is adapted to experience the following steps as the rotor 4 is driven to rotate: it first receives a volume of material through the material feed port 3 and, thereafter, discharges the material into the material discharge port 6, when it is to have a volume of gases relatively high of the pressure introduced to be filled therein from the discharge port side line section, which gases however will be effectively vented through the gas vent hole 56 and the gas vent tube 57 to the atmosphere.

In this respect, when the tubular body 35 has come around in position to again receive a volume of material with the material accommodation chamber 38 thereof, if a part of the high-pressure gases from the discharge port side line section is left therein, such residual high-pressure gases may reversely inflow into the feed port side line section, adversely affecting the inherent flow of material. As will be apparent, to the case where the pressure in the discharge port side line section is not so high, the vertical rotary valve 1 according to the present invention may be applied in a form having neither the gas vent hole 56 nor the gas vent tube 57.

On the other hand, the upper seal plate 7, which is placed on the upside of the upper base plate 33 of the rotor 4, has formed in a part thereof a communication hole 58 communicating with the material feed port 3, at which part the seal plate 7 is fastened to a lower flange portion 59 of the tubular member 29, whereas this member 29 is axially slidably fitted in the opening 30 of the upper cover 21 of the valve housing 2 so as to be air-tight thereagainst by the packing assembly 32 as aforementioned. Moreover, in the central part of the upper seal plate 7, there is formed a through hole 60 for inserting therethrough the drive shaft 5.

In the upside surface of the upper seal plate 7, a pair of later described areas are each respectively downwardly pushed from above with one of a pair of pushing mechanisms 9. Each pushing mechanism 9 comprises a cylindrical holder 61 formed as an integral stuffing box on the upside of the upper cover 21 of the valve housing 2, a packing assembly consisting of a gland packing 62 fitted into depth of the holder 61 and a packing gland 63 screwed in the holder 61 so as to exert from above a variable pressure onto the packing 62, and an adjust screw 66 fitted through the packing assembly and brought into abutment at the lower end part 65 thereof with corresponding one of the aforesaid upside surface areas of the upper seal plate 7. In each of those surface areas, the upper seal plate 7 has a recessed portion 67 adapted to be engaged with the lower end part 65 of the adjust screw 66, so that, by properly thread-driving to let down, this screw 66 is permitted to exert an adjustable pressure onto the seal plate 7, thereby controlling the sealing pressure between the upper seal plate 7 and the upper base plate 33 of the rotor 4 and that between the lower seal plate 8 and the lower base plate 34 of the rotor 4. In this respect, to render uniform the sealing pressure over the seal plates 7, 8, a plurality of such pushing mechanism may preferably provided, whereas this embodiment comprises the paired pushing mechanisms 9 arranged in positions angularly spaced apart from each other at an angle of 180° about the drive shaft 5, as shown in Fig. 2. Incidentally, the engagement relation between the adjust screw 66 and the recessed portion 67 is effectively utilized not only for the exertion of pressure but also to check the seal plate 7 against undesired rotation thereof.

The upper and lower seal plates 7, 8 are made of a sintered metal, while they may be of a hard material such as a ceramic or else of a soft synthetic resin material such as a teflon (also known as registered Trade Mark "Teflon").

In this respect, as shown in Fig. 7, in a partially modified example for an application in which a soft seal plate 7a is desired, there may preferably provided a back-up member 7b made of a metal sheet. Incidentally, in Fig. 7, designated at reference character 7c is an anti-rotation stopper, and 67a is a recessed portion adapted to be engaged with the lower end part 65 of the adjust screw 66.

There will be described hereinbelow the function of the vertical rotary valve 1.

First, a volume of material is sent to the material feed port 3, where it is received by one of the material accommodation chambers 38 when this accommodation chamber 38 is brought with the rotation of the rotor 4 into the position a right below the feed port 3, whereas with further rotation of the rotor 4 the accommodation chamber 38 is to occupy those positions displaced relative to the communication hole 58 of the upper seal plate 7 as well as to the feed port 3, at which the chamber 38 is kept sealed up by the upper and lower seal plates 7, 8 with a controllable sealing pressure exerted thereon by the pushing mechanisms 9. During such phase of rotation, the upper and lower base plates 33, 34 of the rotor 4 are pressed in a sandwiched manner from above and below by the upper and lower plates 7, 8, which are of a platelike form, so that there are produced sufficient pushing forces due to surface-ranging pressures, in addition to that the surface contact assures high air-tightness. With still further rotation of the rotor 4, the accommodation chamber 38 reaches the position b, where it communicates with the material discharge port 6 and discharges the material thereinto. After the discharge of material, with yet further rotation of the rotor 4, the accommodation chamber 38 becomes coincident with the gas vent hole 56 and the gas vent tube 57, through which the gases in the chamber 38 are to be vented, thus permitting the next reception of material to be smoothly performed. The foregoing steps will be repeated.

Incidentally, in this embodiment of the invention, there is employed a medium circulation system as follows.

In Fig. 1, designated at reference numeral 10 is a medium inlet opened through a part of the peripheral wall of the housing body 20, and 11 is a medium outlet formed in a part of the lower cover 22 of the valve housing 2. The inlet 10 and the outlet 11 are adapted to communicate with the outside through medium feed and discharge pipes 69, 71 provided with stop valves 68, 70, respectively, to thereby permit a medium to circulate through the interior chamber 28 of the valve housing 2. The medium may advantageously be selected in accordance with the system of process or the like in a subsequent step: exemplarily, cooling water may be fed into the interior chamber 28 to cool the respective tubular bodies 35 in such a case that the material in use is likely to adhere to the inside wall of each accommodation chambers 38. Further, in the case where the material experiences a heating process in the subsequent step, a hot medium such as steam, hot water, or the like may preferably be fed into the interior chamber 28 to preheat the contents of the tubular bodies 35. Furthermore, in the case of a pressure exerting process, a medium of a higher pressure than the pressure of the process may be fed into the interior chamber 28, to thereby effectively permit the prevention even against small leakage of the material from a certain sealing point.

Moreover, in this embodiment of the invention, as the time of use of the vertical rotary valve 1 becomes longer, the downside of the upper seal plate 7 as well as the upside of the lower seal member 8 may be worn. However, for the upper and lower seal plates 7, 8, which are put in surface contact with the upper and lower base plates 33, 34 of the rotor 4 respectively, such abrasion will be uniform. Therefore, in the use of the rotary valve 1, the sealedness of the respective material accommodation chambers 38 of the rotor 4 is permitted to be easily kept against the interior chamber 28 of the valve housing 2, by no more than adjusting respective pushing forces of the adjust screws 66 of the pushing mechanisms 9 from time to time.

Incidentally, Fig. 6 is an exploded view of a section, as viewed from inside, of such a part of the vertical rotary valve 1 including the material feed port 3, the material discharge port 6, the upper and lower seal plates 7, 8, and the rotor 4, as cut along a cylindrical plane vertically extending at the horizontal distance I1 from the axis O1 of the drive shaft 5.

There will be described hereinbelow various modified examples of the pushing mechanisms 9 for the upper seal plate 7.

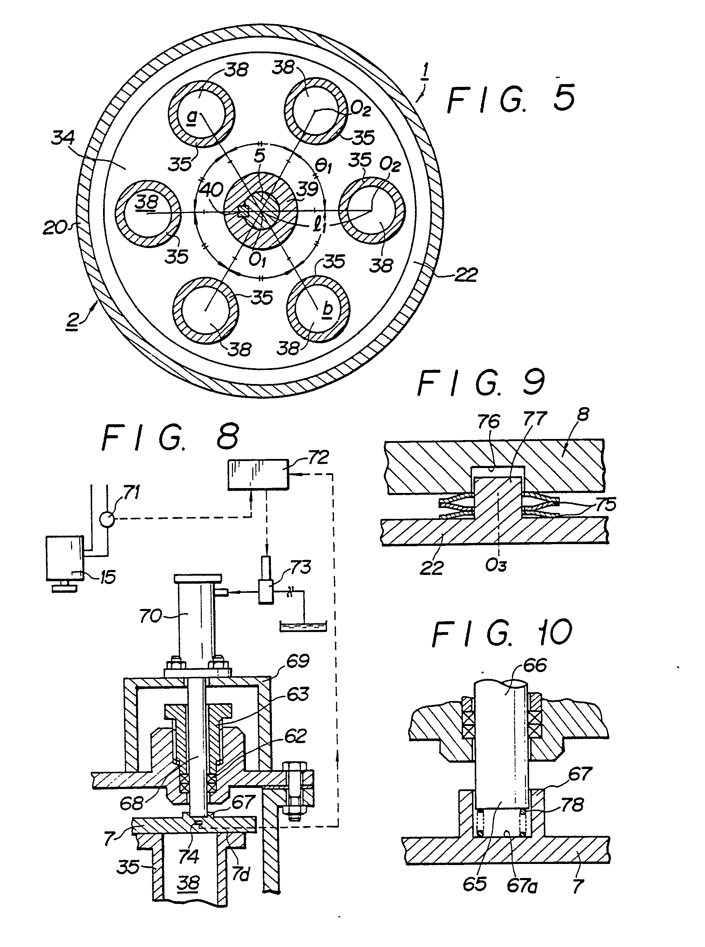

Fig. 8 shows an example in which a hydraulic power cylinder is used as a drive source of pushing mechanism. Instead of the adjust screw 66 provided through the gland packing 62 and the packing gland 63, a rod 68 is adapted to be brought into abutment as well as engagement with the upper seal plate 7, so that pressures are exerted on the seal plate 7 by letting down the rod 68 with the supply of hydraulic oil to a power cylinder 70 held by a support member 69. In this example, to keep constant the pressure acting on a sealing surface 7d, the cylinder 70 is controlled by detecting a load current of the motor 15 which is variable depending on that pressure. More particularly, the motor 15 adapted for driving the drive shaft 5 into rotation has the load current thereof detected with a current meter 71', of which output signal is input into a controller 72 adapted to provide a servo valve 73 with a command in accordance the signal from the current meter 71', to control the travel of the cylinder 70, thereby adjusting the pressure acting on the sealing surface 7d. Further, in this example, for an increased control accuracy, a pressure sensor 74 adapted to detect the pressure that the rod 68 exerts on the seal plate 7 is provided in a region of the seal plate 7 at which the rod 68 abut on the plate 7, to thereby control the pressure of the cylinder 70. In this respect, a pressure sensor may be provided on the sealing surface 7d to detect the pressure acting thereon. Or otherwise, a medium from the sealing surface 7d, for example a leaked quantity such as of water vapor, may be detected to thereby control the cylinder 70.

Figs. 9 and 10 show examples of a vibration absorbing mechanism for the vertical rotary valve 1, respectively.

In the example of Fig. 9, a number of conical plate springs 75 are interposed between the lower seal plate 8 and the lower cover 22. The seal plate 8 is formed at the downside thereof with a downwardly opening recess 76, and the lower cover 22, at the upside thereof with an upward projection 77 loose-fittable into the recess 76, whereby the horizontal relative movement of the seal plate 8 with respect to the lower cover 22 is restricted, while the vertical gap therebetween is permitted in a resiliently guided manner by the springs 75 which are fitted on the projection 77. The projection 77 has the axis O3 thereof disposed at the distance I1 from the axis O1 of the drive shaft 5.

In the example of Fig. 10, a coiled spring 78 is interposed between the lowest end of the lower end part 65 of the adjust screw 66 and a bottom surface 67a of the recessed portion 67 of the upper seal plate 7, whereas the depth dimension of the recessed portion 67 is made larger than the case of Fig. 1 to thereby prevent the lower end part 65 of the adjust screw 66 from coming out of the recessed portion 67.

According to the examples of Figs. 9 and 10, vertical vibrations of the rotor 4 during operation of the rotary valve 1 can be effectively absorbed.

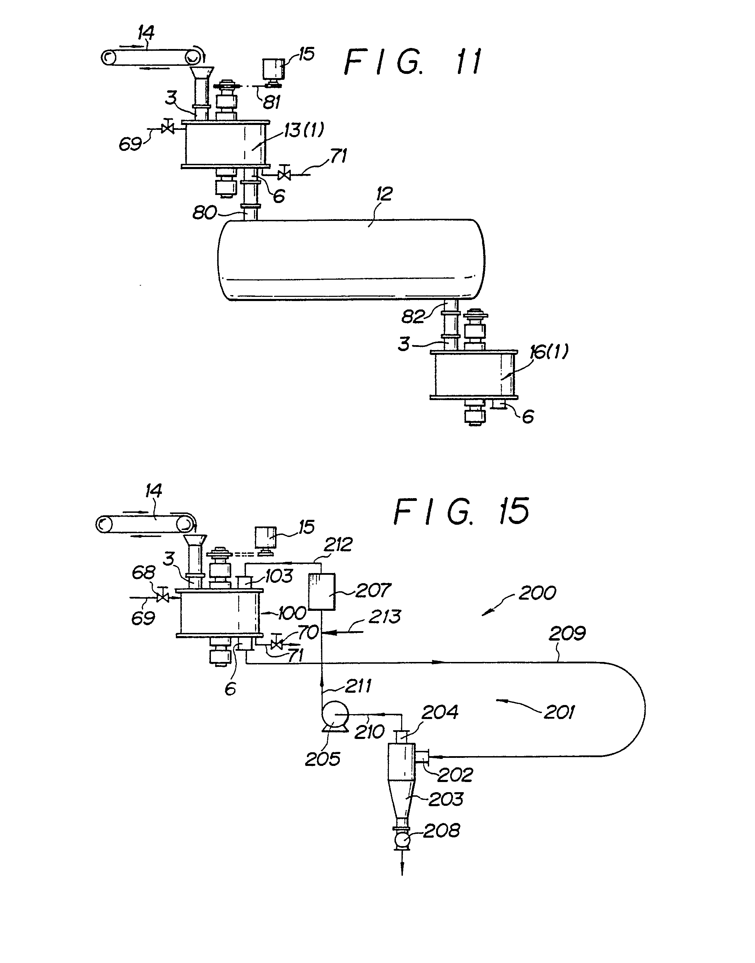

Fig. 11 shows a practical example of application of the vertical rotary valve according to the present invention, in which the rotary valve 1 is used as a material feed device 13 on one hand and as a material discharge device 16 on the other hand in a plant for a heating treatment under pressure.

In Fig. 11, designated at reference numeral 12 is a smothering tank for heating under pressure a material such as for example a soybean by use of saturated steam. The material feed device 13 comprises the vertical rotary valve 1 as above mentioned. The material feed port 3 is located below the discharge end of a material feeder 14 and the material discharge port 6 is connected to an inlet part 80 of the smothering tank 12, thus airtightly feeding the smothering tank 12 with the material through the rotary valve 1, while the interior chamber 28 of the valve housing has hot steam circulated through the feed and discharge pipes 69, 71 to preheat the material to be fed into the smothering tank 12. Designated at reference numeral 15 is a motor for driving the rotor 4, which motor 15 is operatively connected through a chain and sprocket drive 81 to the drive shaft 5. The material as treated by heating under pressure in the smothering tank 12 is transferred to the material discharge device 16, from which it is discharged to be sent as required. Also the discharge device 16 comprises the vertical rotary valve 1 as already described. An outlet part 82 of the smothering tank 12 is connected to the material feed port 3 of the discharge device 16, so that the material is received therefrom and discharged. as a produced through the material discharge port 6 of the discharge device 16. As will be understood, at the material discharge device 16 comprising the rotary valve 1, those high-temperature, high-pressure gases sent in the material accommodation chambers 38 together with the treated materials from the outlet part 82 of the smothering tank 12 are to be discharged through the material discharge port 6 when the material is discharged therethrough. Therefore, for the rotary valve 1 used as the material discharge device 16, the gas vent valve 56 and the gas vent tube 57 are not always needed.

As will be understood from the foregoing description, in the vertical rotary valve 1 according to the present invention, those seal members 7, 8 provided for sealing the rotor 4 from the interior chamber 28 of the valve housing 2 have a plate-like form, so that the sealing surface area of each of them is made larger than that of corresponding one of ring-like seal members used in a conventional vertical rotary valve, thus resulting in decrease in the abrasion and rise of the durability, while permitting the seal members 7, 8 to be pushed against the rotor 4 with stronger forces, thus effectively raising the sealability.

Moreover, in the vertical rotary valve 1, the pushing mechanisms 9 for fixing the seal members 7, 8 while pushing them against the rotor 4 are adapted to push the seal plates 7, 8 and particularly to push the upper seal plate 7 against the upper base plate 33 of the rotor 4 at positions circumferentially coincident with the material accommodation chambers 38, irrespective of a sealing mechanism (consisting of the gaskets 25, 26 and the bolts 27) between principal constituent members (such as the body 20 and the upper and lower covers 21, 22) of the valve housing 2. Therefore, the load pressure per unit area acting on the upper seal plate 7 at such positions can be raised, as necessary, and hence the sealing of the accommodation chambers 38 of the rotor 4 is permitted, against the interior chamber 28 of the valve housing 2, to be uniformly and more firmly effected.

Particularly, the rotary valve 1, in which the seal members 7, 8 are of a flat plate form, permits the precision of machining to be easily raised, while simplifying also the fixing structure of the seal members 7, 8, thus effectively contributing to the structural simplification as well as cost reduction of the whole part of the vertical rotary valve.

Further, in the rotary valve 1 which includes the gaskets 25, 26 relatively large of the sealing surface area, also the sealedness of the interior chamber 28 itself of the valve housing 2 is increased when comparing with a conventional vertical rotary valve including a valve housing composed of upper and lower halves.

Furthermore, in the rotary valve 1, each of the material accommodation chambers 38 in the rotor 4 is shaped in a circular form in the section, with the inside diameter r2 substantially equal to those r1, r3 of the material feed and discharge ports 3, 6, so that the flow of material is made uniform in the feed into the accommodation chamber 38 as well as in the discharge therefrom, thus permitting the material feeding and discharging functions as inherent valve functions to be smoothly achieved. In addition thereto, when compared with a conventional vertical rotary valve including a plurality of material accommodation chambers shaped in a sectorial form in the section, in the rotary valve 1 the material is unlikely to adhere to the inside wall of the respective material accommodation chambers 38.

Still more, in the rotary valve 1 in which the plural tubular bodies 35 defining the material accommodation chambers 38 are angularly spaced apart from each other and all interposed between the upper and lower base plates 33, 34 of the rotor 4, it is permitted to provide a medium circulation system (consisting of the medium inlet 10 and outlet 11, the medium feed and discharge pipes 69, 71, and the stop valves 68, 70), whereas the provision of such system is substantially impossible or useless in a conventional vertical rotary valve in which a plurality of material accommodation chambers of a sectorial form in the section are provided by dividing the interior of a single cylindrical rotor.

Incidentally, in the foregoing embodiment, the material in any of the material accommodation chambers 38 of the rotor 4 is caused to drop into the material discharge port 6 by the own weight thereof, that is, the material discharge from the rotary valve 1 is spontaneously effected taking the advantage of the gravity.

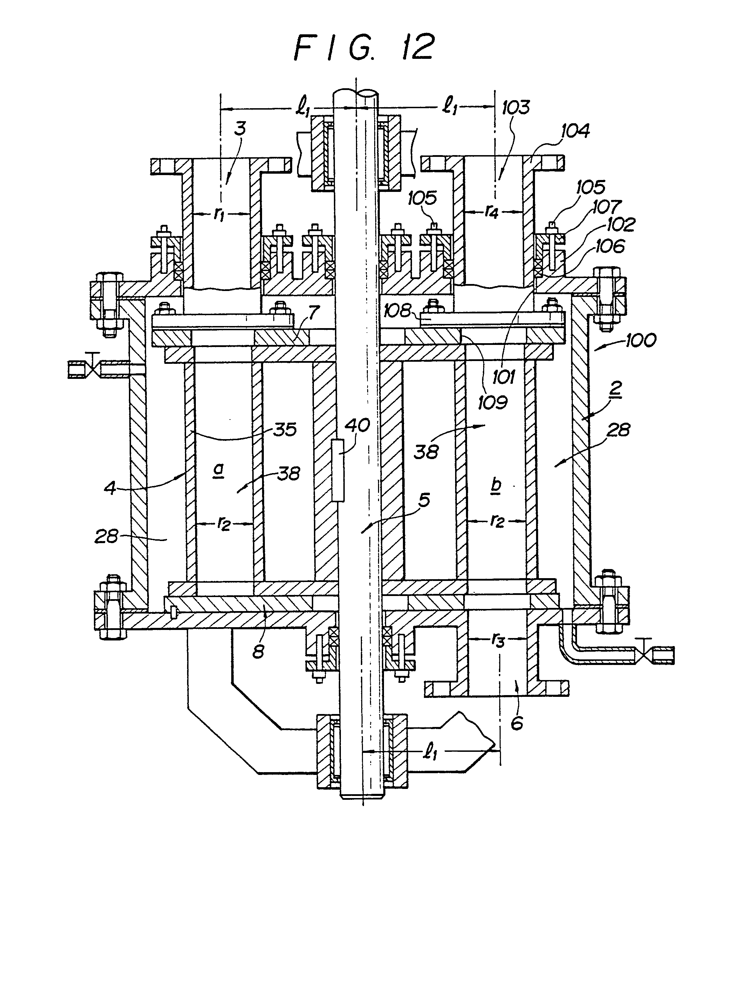

In this respect, in Fig. 12, there is given a longitudinal sectional view of a vertical rotary valve 100 according to a modified example of the present invention in which a volume of material as once received in any of plural material accommodation chambers 38 of a rotor 4 is forcibly let to discharge into a material discharge port 6 by means of a heating medium which is same as that used in a material treatment plant installed at the discharge side of the valve 100. Incidentally, in this modified example, the basic structural arrangement and fundamental functions are analogous to those of the vertical rotary valve 1, excepting a below described heating medium supply system, so that like parts are designated by like reference numerals, while eliminating redundant description thereof.

In the vertical rotary valve 100, an upper cover 21 of a valve housing 2 has formed therethrough an opening 101, of which axis is coincident with that of the material discharge port 6. Around the opening 101, the upside of the upper cover 21 is formed with an annular projection 102 standing thereon as a stuffing box. In the opening 101 is fitted a tubular member 104 which defines therein a heating medium inlet port 103 with an inside diameter r4 equal to that r3 of the material discharge port 6. The clearance between the opening 101 and the tubular member 104 is sealed in an air-tight manner with a packing assembly fitted in the annular projection 102, the packing assembly consisting of a gland packing 106 and a flange-headed packing gland 107 fixed to the annular projection 102 by means of bolts 105. The axis of the heating medium inlet port 103 is disposed at a distance l1 from the axis of a drive shaft 5, similarly to that of a material feed port 3.

The tubular member 104 has a lower flanged portion 108 air-tightly fastened to the upside of an upper seal plate 7, which plate 7 also is formed therethrough with a circular communication hole 109 coaxial with and substantially equal in the cross-sectional area to the heating medium inlet port 103. The communication hole 109 is provided for the purpose of adapting the heating medium inlet port 103 to communicate with that one of the material accommodation chambers 38 which is then put in communication with the material discharge port 6, to send a heating medium into this accommodation chamber 38, thereby forcibly letting the material of the accommodation chamber 38 to discharge into the discharge port 6. The tubular member 104, fitted in the opening 101 of the upper cover 21 through the gland packing 106 and the packing gland 107, is adapted to be slidable relative to the packing assembly in the axial direction of the drive shaft 5, that is, in the vertical direction.

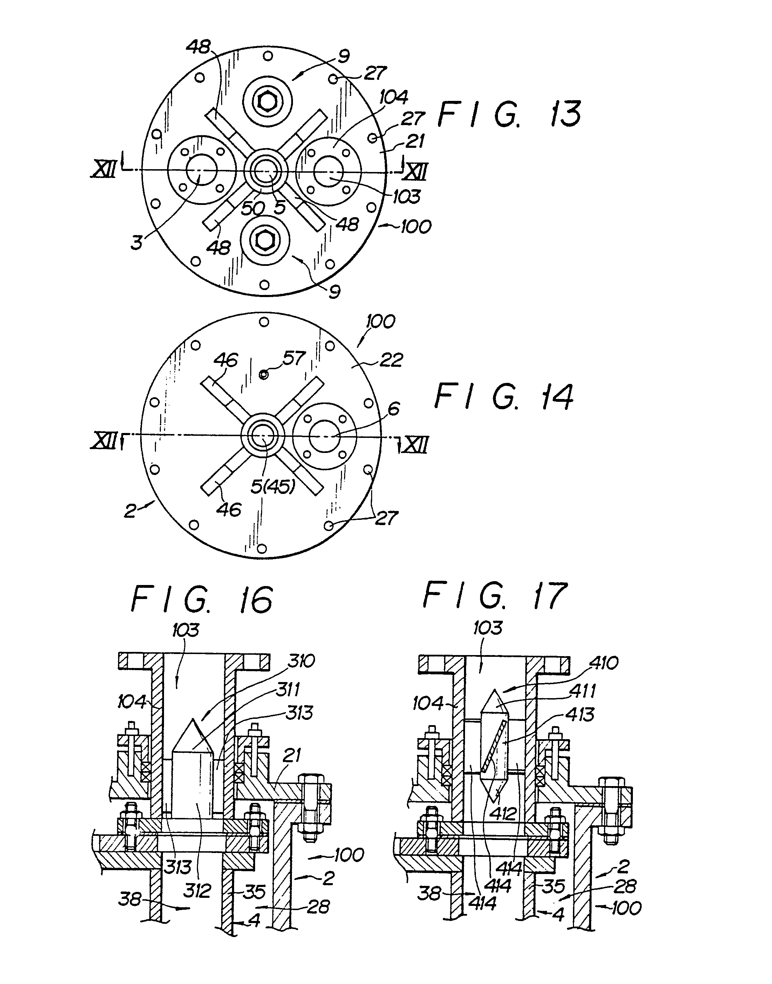

Figs. 13 and 14 are top and bottom views of the vertical rotary valve 100 of Fig. 12, respectively. As aforementioned, the structural arrangement of the rotary valve 100 is analogous to that of the rotary valve 1, excepting the heating medium supply system consisting of the annular projection 102, the heating medium inlet port 103, the tubular member 104, the fixing bolts 105, the gland packing 106, and the packing gland 107. Thus, there are provided a pair of upper seal plate pushing mechanisms 9 arranged symmetrical to each other with respect to the drive shaft 5, and a gas vent tube 57 is provided on the downside of a lower cover 22.

The heating medium to be inlet from the heating medium inlet port 103 is made of high-temperature, high-pressure gases in use in the material treatment plant for treating the material discharged from the material discharge port 6 of the rotary valve 100. In this respect, a detailed description will follow, including an explanation of the system with which such heating medium is supplied to the inlet port 103.

Fig. 15 shows an example of application in which the vertical rotary valve 100 is employed in a heating equipment 200 of a flash type. The flash type heating equipment 200 comprises a heating pipe 209 adapted to have conducted therethrough a flow of superheated steam for flashingly carrying while being mixed with a material and for concurrently performing a heating treatment thereof, a cyclone 203 for separating the heat-treated mixture into the material and the superheated steam, a product discharge valve 208 provided at a discharge port 203a of the cyclone 203 and adapted to discharge the treated material out of system in an air-tight manner, a circulation blower 205 for circulating the superheated steam, a superheater 207 for heating the superheated steam as lowered of the temperature through the mixing with the material, and the vertical rotary valve 100 employed as a feeding device of the material.

The heating pipe 209 is connected at the upstream end thereof to the material discharge port 6 of the rotary valve 100 and at the downstream end thereof to an entrance port 202 of the cyclone 203. Moreover, an outlet 204 of the cyclone 202 is connected to the suction port of the circulation blower 205 through a steam line 210, and the delivery port of the blower 205, via the superheater 207 to the heating medium inlet port of the rotary valve 100 through steam lines 211, 212, whereby a circulation system 201 is constituted. In Fig. 15, designated at reference numeral 213 is a saturated steam supply line for supplying the circulation system 201 with saturated system, the supply line 213 being connected to the steam line 211.

In the flash type heating equipment 200 of such constitution as described above, the material as fed from the feeder 14 through the material feed port 3 into the vertical rotary valve 100 is to be discharged, when the rotor 4 in Fig. 12 is rotated by one-half turn or at 180°, from the material discharge port 6 by the own weight thereof or the flashing of superheated steam. Then, being carried while heat-treated by the flashing superheated steam in the heating pipe 209, the material enters the cyclone 203, where it is separated from the superheated steam, to be discharged to be collected as a product through the product discharge valve 208, while the superheated steam is forced by the circulation blower 205 into circulation through the circulation system 201.

Fig. 16 shows a partially modified example of the heating medium inlet port 103. The inlet port 103 has coaxially arranged in the way thereof a baffle member 310 for reducing the sectional area of medium flow path, the baffle member 310 comprising a cylindrical body part 312, a conical head part 311, and a pair of support plates 313 for interconnecting the cylindrical part 312 with the inside wall of the tubular member 104.

According to such constitution, a flow of the heating medium introduced to the inlet port 103 has the speed thereof increased by the baffle member 310, before entering one of the material accommodation chambers 38, thus permitting the material in this accommodation chamber 38 to be further effectively discharged.

Moreover, the heating medium with increased flow speed is fed into the accommodation chamber 38 along the inside wall of the tubular body 35, thus further assuring the discharge of material, particularly flashing out the residual material sticking to the inside wall of the tubular body 35.

Fig. 17 shows another partially modified example of the heating medium inlet port 103. The inlet port 103 has disposed in the way thereof a swirling blade member 410 for generating swirling streams. The blade member 410 comprises a small-diameter cylindrical part 413 coaxially arranged with respect to the inlet port 103, and four skewed blades 414 for interconnecting the cylindrical part 413 with the inside wall of the cylindrical member 104, the blades 414 being equiangularly spaced apart at circumferential intervals of 90° about the cylindrical part 413 and inclined at a predetermined angle. The cylindrical part 413 is conically shaped at the upper and lower ends thereof to provide upper and lower conical portions 411, 412, respectively.

According to such constitution, a flow of the heating medium introduced to the inlet port 103 is tangentially deflected to generate swirling streams, before entering one of the accommodation chambers 38, thus further promoting the material discharge from this accommodation chamber 38.

Incidentally, instead of the foregoing embodiment in which the material accommodation chambers 38 of the rotor 4 have the axes thereof vertically arranged, the present invention may be so embodied as to have the axes of material accommodation chambers all inclined at a predetermined angle.

Moreover, not limitting to the foregoing embodiment, the location in the upper cover 21 as well as the number of the pushing mechanisms 9 may be arbitrarily determined, as circumstances require, providing that the upper seal plate 7 is adequately pushed against the rotor 4.

**Claims**

1. A vertical rotary valve (1) comprising a valve housing (2) with an interior chamber (28) defined therein, said valve housing (2) having in an upper portion (21) thereof a material feed port (3) and in a lower portion (22) thereof a material discharge port (6) different in the horizontal position from said material feed port (3), a rotary drive shaft (5) vertically arranged through the central part of said valve housing (2) and adapted to be air-tight thereto, and a rotor (4) fixed on said drive shaft (5) within said interior chamber (28) of said valve housing (2), said rotor (4) containing at least one material accommodation chamber (35, 38) having an upper opening (36) adapted to receive at a first position (a) of said material accommodation chamber (35, 38) a volume of material from said material feed port (3) and a lower opening (37) adapted to discharge at a second position (b) of said material accommodation chamber (35, 38) said material into said material discharge port (6), characterized by a plate-like upper seal member (7) interposed between said upper portion (21) of said valve housing (2) and an upper portion (33) of said rotor (4), said upper seal member (7) having a communication hole (58) for adapting said upper opening (36) of said material accommodation chamber (35, 38) as located at said first position (a) thereof to communicate with said material feed part (3), a plate-like lower seal member (8) interposed between said lower portion (22) of said valve housing (2) and a lower portion (34) of said rotor (4), said lower seal member (8) having a communication hole (53) for adapting said lower opening (37) of said material accommodation chamber (35, 38) as located at said second position (b) thereof to communicate with said material discharge port (6), and a plurality of pusher mechanisms (9) passing through bores in the upper portion (21) of said valve housing (2) and movable axially relative to said housing (2), said pusher mechanisms (9) pressing directly against the surface of said upper seal member (7) for pressing said upper seal member (7) in the axial direction of said rotor (4) against the upper surface of said rotor (4).

2. A vertical rotary valve according to claim 1, wherein said plate-like upper seal member (7) and said plate-like lower seal member (8) are vertically movably and relatively non-rotatably arranged with respect to said valve housing (2).

3. A vertical rotary valve according to claim 2, wherein said pusher mechanisms (9) comprise an adjust screw (66) air-tightly provided through said upper portion (21) of said valve housing (2).

4. A vertical rotary valve according to claim 3, wherein said adjust screw (66) has a lower end part (65) thereof engaged with the upside of said plate-like upper seal member (7).

5. A vertical rotary valve according to claim 4, wherein said pusher mechanisms (9) further comprise a spring member (78) interposed between said lower end part (65) of said adjust screw (66) and said plate-like upper seal member (7).

6. A vertical rotary valve according to claim 2, wherein said pusher mechanisms (9) comprise a rod (68) vertically provided through said upper portion (21) of said valve housing (2), and control means (71, 74, 72, 73, 70) for automatically controlling the pushing force of said rod (68).

7. A vertical rotary valve according to claim 1, further comprising auxiliary pushing means (75, 76, 77) for pressing said plate-like lower seal member (8) in the axial direction of said rotor (4) against the lower surface of said rotor (4).

8. A vertical rotary valve according to claim 7, wherein said auxiliary pushing means (75, 76, 77) comprises a spring member (75) interposed between said plate-like lower seal member (8) and said lower portion (22) of said valve housing (2).

9. A vertical rotary valve according to claim 1, wherein said material accommodation chamber (35, 38) of said rotor (4) has the axis thereof vertically arranged.

10. A vertical rotary valve according to claim 9, wherein said material feed port (3) and said material discharge port (6) of said valve housing (2) are circular in the section, respectively, and wherein said cylindrical material accommodation chamber (35, 38) has a circular section thereof substantially equal in the area to each of respective circular sections of said material feed port (3) and said material discharge port (6).

11. A vertical rotary valve according to claim 9, wherein said rotor (4) comprises a holder (39) fixed on said rotary drive shaft (5), upper and lower base plates (33, 34) fixed to said holder (39), and at least one tubular member (35) interposed between said upper and lower base plates (33, 34), and wherein said material accommodation chamber (38) comprises a cylindrical space (38) in said tubular member (35).

12. A vertical rotary valve according to claim 1, further comprising medium circulation means (68, 69, 10, 11, 71, 70) for circulating a medium through said interior chamber (28) of said valve housing (2).

13. A vertical rotary valve according to claim 1, further comprising gas vent means (56, 57) for bringing said material accommodation chamber (35, 38), at a position different from both of said first position (a) and said second position (b), into communication with the atmosphere, after the material is discharged at said second position (b) from said material accommodation chamber (35, 38) into said material discharge port (6).

14. A vertical rotary valve according to claim 1, further comprising a medium inlet port (103) for introducing a medium into in said material accommodation chamber (35, 38) as located in said second position (b), to thereby forcibly letting the material in said material accommodation chamber (35, 38) discharge into said material discharge port (6).

15. A vertical rotary valve according to claim 14, wherein said medium inlet port (103) is provided on said upper portion (21) of said valve housing (2), and wherein said plate-like upper seal member (7) has a communication hole (109) for bringing said upper opening (36) of said material accommodation chamber (35, 38) as located in said second position (b) into communication with said medium inlet port (103).

16. A vertical rotary valve according to claim 15, further comprising a baffle member (310) disposed in said medium inlet port (103), to thereby reduce the flow path area of said medium inlet port (103).

17. A vertical rotary valve according to claim 15, further comprising a swirling flow generating member (410) disposed in said medium inlet port (103), to thereby cause a flow of the medium as introduced into said medium inlet port (103) to swirl.

## Patentansprüche

1. Vertikales Drehventil (1) enthaltend ein Ventilgehäuse (2) mit einer darin ausgebildeten Innenkammer (28), welches Ventilgehäuse (2) in einem oberen Abschnitt (21) von sich einen Materialzuführungsgang (3) und in einem unteren Abschnitt (22) von sich einen Materialabgabegang (6) aufweist, der gegenüber dem Materialzuführungsgang (3) eine unterschiedliche horizontale Position einnimmt, eine Drehantriebswelle (5), die vertikal durch den mittigen Teil des Ventilgehäuses (2) geführt ist und dagegen luftdicht vorgesehen ist, und einen Rotor (4), der innerhalb der Innenkammer (28) des Ventilgehäuses (2) an der Antriebswelle (5) befestigt ist, welcher Rotor (4) enthält wenigstens eine Materialaufnahmekammer (35, 38) mit einer oberen Öffnung (36), die bei einer ersten Position (a) der Materialaufnahmekammer (35, 38) zum Empfangen eines Volumens an Material von dem Materialzuführungsgang (3) geeignet ist, und mit einer unteren Öffnung (37), die bei einer zweiten Position (b) der Materialaufnahmekammer (35, 38) zum Abgeben dieses Materials in den Materialabgabegang (6) geeignet ist, gekennzeichnet durch ein plattenartiges oberes Dichtungsteil (7), das zwischen dem oberen Abschnitt (21) des Ventilgehäuses (2) und einem oberen Abschnitt (33) des Rotors (4) angeordnet ist, welches obere Dichtungsteil (7) ein Verbindungsloch (58) hat, das zum Verbinden der oberen Öffnung (36) der Materialaufnahmekammer (35, 38) bei ihrer ersten Position (a) mit dem Materialzuführungsgang (3) geeignet ist, ein plattenartiges unteres Dichtungsteil (8), das zwischen dem unteren Abschnitt (22) des Ventilgehäuses (2) und einem unteren Abschnitt (34) des Rotors (4) angeordnet ist, welches untere Dichtungsteil (8) ein Verbindungsloch (53) hat, das zum Verbinden der unteren Öffnung (37) der Materialaufnahmekammer (35, 38) bei ihrer zweiten Position (b) mit dem Materialabgabegang (6) geeignet ist, und eine Vielzahl von Andruckmechanismen (9), die durch Bohrungen im oberen Abschnitt (21) des Ventilgehäuses (2) geführt sind und gegenüber diesem Gehäuse (2) axial beweglich sind, welche Andruckmechanismen (9) direkt gegen die Oberfläche des oberen Dichtungsteils (7) drücken und dadurch das obere Dichtungsteil (7) in der Axialrichtung des Rotors (4) gegen die obere Oberfläche des Rotors (4) drücken.

2. Vertikales Drehventil nach Anspruch 1, bei dem das plattenartige obere Dichtungsteil (7) und das plattenartige untere Dichtungsteil (8) in bezug auf das Ventilgehäuse (2) vertikal verschieblich und relativ nicht drehbar angeordnet sind.

3. Vertikales Drehventil nach Anspruch 2, bei dem die Andruckmechanismen (9) eine Einstellschraube (66) enthalten, die luftdicht durch den oberen Abschnitt (21) des Ventilgehäuses (2) geführt ist.

4. Vertikales Drehventil nach Anspruch 3, bei dem diese Einstellschraube (66) ein unteres Endteil (65) besitzt, das an der Oberseite des plattenartigen oberen Dichtungsteils (7) angreift.

5. Vertikales Drehventil nach Anspruch 4, bei dem die Andruckmechanismen (9) ferner ein Federteil (78) enthalten, das zwischen dem unteren Endteil (65) der Einstellschraube (66) und dem plattenartigen oberen Dichtungsteil (7) angeordnet ist.

6. Vertikales Drehventil nach Anspruch 2, bei dem die Andruckmechanismen (9) enthalten eine Stange (68), die vertikal durch den oberen Abschnitt (21) des Ventilgehäuses (2) geführt ist, und eine Steuereinrichtung (71, 74, 72, 73, 70), die die Druckkraft der Stange (68) automatisch einstellt.

7. Vertikales Drehventil nach Anspruch 1, ferner enthaltend eine Hilfsandruckvorrichtung (75, 76, 77), die das plattenartige untere Dichtungsteil (8) in der Axialrichtung des Rotors (4) gegen die untere Oberfläche des Rotors (4) drückt.

8. Vertikales Drehventil nach Anspruch 7, bei dem die Hilfsandruckvorrichtung (75, 76, 77) ein Federteil (75) enthält, das zwischen dem plattenartigen unteren Dichtungsteil (8) und dem unteren Abschnitt (22) des Ventilgehäuses (2) angeordnet ist.

9. Vertikales Drehventil nach Anspruch 1, bei dem die Materialaufnahmekammer (35, 38) des Rotors (4) mit ihrer Achse senkrecht angeordnet ist.

10. Vertikales Drehventil nach Anspruch 9, bei dem der Materialzuführungsgang (3) und der Materialabgabegang (6) des Ventilgehäuses (2) jeweils einen kreisförmigen Querschnitt haben und bei dem die zylindrische Materialaufnahmekammer (35, 38) einen kreisförmigen Querschnitt hat, der flächenmäßig im wesentlichen gleich dem kreisförmigen Querschnitt des Materialzuführungsgangs (3) und des Materialabgabegangs (6) ist.

11. Vertikales Drehventil nach Anspruch 9, bei dem der Rotor (4) enthält einen Halter (39), der an der Drehantriebswelle (5) befestigt ist, eine obere und eine untere Grundplatte (33, 34), die am Halter (39) befestigt sind, und wenigstens ein rohrförmiges Teil (35), das zwischen der oberen und der unteren Grundplatte (33, 34) angeordnet ist, und bei dem die Materialaufnahmekammer (38) einen zylinderförmigen Raum (38) in dem rohrförmigen Teil (35) aufweist.

12. Vertikales Drehventil nach Anspruch 1, ferner enthaltend eine Mediumzirkulationsvorrichtung (68, 69, 10, 11, 71, 70) zum Zirkulieren eines Mediums durch die Innenkammer (28) des Ventilgehäuses (2).

13. Vertikales Drehventil nach Anspruch 1, ferner enthaltend eine Gaslüftungsvorrichtung (56, 57), die dazu dient, die Materialaufnahmekammer (35, 38) bei einer Position, die sowohl von der ersten Position (a) und der zweiten Position (b) verschieden ist, in Verbindung mit der Atmosphäre zu bringen, nachdem das Material bei der zweiten Position (b) aus der Materialaufnahmekammer (35, 38) in den Materialabgabegang (6) gegeben worden ist.

14. Vertikales Drehventil nach Anspruch 1, ferner enthaltend einen Mediumeinlaßgang (103) zum Einführen eines Mediums in die Materialaufnahmekammer (35, 38), wenn sie sich in der zweiten Position (b) befindet, um das Material in der Materialaufnahmekammer (35, 38) unter Zwang in den Materialabgabegang (6) abzugeben.

15. Vertikales Drehventil nach Anspruch 14, bei dem der Mediumeinlaßgang (103) auf dem oberen Abschnitt (21) des Ventilgehäuses (2) vorgesehen ist und bei dem das plattenartige obere Dichtungsteil (7) ein Verbindungsloch (109) aufweist, das dazu dient, die obere Öffnung (36) der Materialaufnahmekammer (35, 38), wenn sie sich in der zweiten Position (b) befindet, in Verbindung mit dem Mediumeinlaßgang (103) zu bringen.

16. Vertikales Drehventil nach Anspruch 15, ferner enthaltend ein im Mediumeinlaßgang (103) angeordnetes Drosselteil (310) zum Herabsetzen der Strömungsbahnfläche des Mediumeinlaßgangs (103).

17. Vertikales Drehventil nach Anspruch 15, ferner enthaltend ein eine Wirbelströmung hervorrufendes Teil (410), das im Mediumeinlaßkanal (103) angeordnet ist und dazu dient, in einem Strom des in den Mediumeinlaßkanal (103) eingeführten Mediums Wirbel hervorzurufen.

**Revendications**

1. Vanne rotative verticale (1) comprenant un logement de vanne (2) dans lequel est formée une chambre intérieure (28), ce logement de vanne (2) comportant, dans l'une (21) de ses parties supérieures, un passage d'alimentation de matière (3) et, dans l'une (22) de ses parties inférieures un passage de décharge de matière (6) d'une position horizontale différente de celle du passage d'alimentation de matière (3), un arbre d'entraînement rotatif (5) agencé verticalement à travers la partie centrale du logement de vanne (2) et destiné à être rendu étanche à l'air, et un rotor (4) fixé sur l'arbre d'entraînement susdit (5) dans la chambre interne susdite (28) du logement de vanne (2), ce rotor (4) comportant au moins une chambre de logement de matière (35, 38) présentant une ouverture supérieure (36) destinée à recevoir, dans une première position (a) de la chambre de logement de matière (35, 38), un volume de matière venant du passage d'alimentation de matière (3), et une ouverture inférieure (37) destinée à décharger, dans une seconde position (b) de la chambre de logement de matière (35, 38) la matière susdite dans le passage de décharge de matière (6), caractérisée par un élément de joint supérieur (7) en forme de plaque, interposé entre la partie supérieure (21) du logement de vanne (2) et une partie supérieure (33) du rotor (4), cet élément de joint supérieur (7) comportante un trou de communication (58) destiné à s'adapter à l'ouverture supérieure (36) de la chambre de logement de matière (35, 38), lorsque cette ouverture supérieure est localisée dans sa première position (a) en vue de communiquer avec le passage d'alimentation de matière (3), un élément de joint inférieur (8) en forme de plaque et interposé entre la partie inférieure (22) du logement de vanne (2) et une partie inférieure (34) du rotor (4), cet élément de joint inférieur (8) présentant un trou de communication (53) destiné à s'adapter à l'ouverture inférieure (37) de la chambre de logement de matière (37, 38), lorsque cette ouverture inférieure se trouve dans sa seconde position (b) pour communiquer avec le passage de décharge de matière (6), et plusieurs mécanismes poussoirs (9) traversant des passages prévus dans la partie supérieure (21) du logement de de vanne (2) et mobiles axialement par rapport à ce logement (2), ces mécanismes poussoirs (9) agissant directement par pression contre la surface de l'élément de joint supérieur (7) pour presser celui-ci dans la direction axiale du rotor (4) contre la surface supérieure de ce rotor (4).

2. Vanne rotative verticale suivant la revendication 1, caractérisée en ce que l'élement de joint supérieur (7) en forme de plaque et l'élément de joint inférieur (8) en forme de plaque sont agencés pour être mobiles verticalement mais de manière relativement non rotative par rapport au logement de vanne (2).

3. Vanne rotative verticale suivant la revendication 2, caractérisée en ce que les mécanismes poussoirs (9) comprennent une vis de réglage (66) montée de manière étanche à l'air à travers la partie supérieure (21) du logement de vanne (2).

4. Vanne rotative verticale suivant la revendication 3, caractérisée en ce que la vis de réglage (66) comporte une partie extrême inférieure (65) destinée à entrer en contact avec le côté supérieur de l'élément de joint supérieur en forme de plaque (7).

5. Vanne rotative verticale suivant la revendication 4, caractérisée en ce que les mécanismes poussoirs (9) comprennent en outre un élément de ressort (78) interposé entre la partie extrême inférieure (65) de la vis de réglage (66) et l'élément de joint supérieur en forme de plaque (7).

6. Vanne rotative verticale suivant la revendication 2, caractérisée en ce que les mécanismes poussoirs (9) comprennent une tige (68) montée verticalement à travers la partie supérieure (21) du logement de vanne (2), et des moyens de contrôle (71, 74, 72, 73, 70) destinés à contrôler automatiquement la force de poussée de cette tige (68).

7. Vanne rotative verticale suivant la revendication 1, caractérisée en ce qu'elle comprend en outre des moyens poussoirs auxiliaires (75, 76, 77) destinés à presser l'élément de joint inférieur en forme de plaque (8) dans la direction axiale du rotor (4) contre la surface inférieure de ce rotor (4).

8. Vanne rotative verticale suivant la revendication 7, caractérisée en ce que les moyens poussoirs auxiliaires (75, 76, 77) comprennent un élément de ressort (75) interposé entre l'élément de joint inférieur en forme de plaque (8) et la partie inférieure (22) du logement de vanne (2).

9. Vanne rotative verticale suivant la revendication 1, caractérisée en ce que la chambre de logement de matière (35, 38) du rotor (4) a son axe de symétrie agencé verticalement.

10. Vanne rotative verticale suivant la revendication 9, caractérisée en ce que le passage d'alimentation de matière (3) et le passage de décharge de matière (10) du logement de vanne (2) sont de section circulaire, et en ce que la chambre cylindrique de logement de matière (35, 38) présente une section circulaire dont l'aire est essentiellement égale à celle de chacune des sections circulaires correspondantes du passage d'alimentation (3) et du passage de décharge de matière (6).

11. Vanne rotative verticale suivant la revendication 9, caractérisée en ce que le rotor (4) comprend un support (39) fixé sur l'arbre d'entraînement rotatif (5), des plaques de base supérieure et inférieure (33, 34) fixées à ce support (39), et au moins un élément tubulaire (35) interposé entre ces plaques de base supérieure et inférieure (33, 34), et en ce que la chambre de logement de matière (38) est constitué par un espace cylindrique (38) existant dans cet élément tubulaire (35).

12. Vanne rotative verticale suivant la revendication 1, caractérisée en ce qu'elle comprend en outre des moyens de circulation de milieu (68, 69, 10, 11, 71, 70) pour la circulation d'un milieu à travers la chambre intérieure (28) du logement de vanne (2).

13. Vanne rotative verticale suivant la revendication 1, caractérisée en ce qu'elle comprend en outre des moyens d'évacuation de gaz (56, 57) pour amener la chambre de logement de matière (35, 38) dans une position différente à la fois de la première position susdite (a) et de la seconde position susdite (b) en communication avec l'atmosphère, après que la matière a été déchargée dans la seconde position susdite (b) depuis la chambre de logement de matière (35, 38), dans le passage de décharge de matière (6).

14. Vanne rotative verticale suivant la revendication 1, caractérisée en ce qu'elle comprend en outre un passage d'entrée de milieu (103) destiné à l'introduction d'un milieu dans la chambre de logement de matière (35, 38), dans la seconde position susdite (b) pour imposer ainsi le déchargement de force de la matière se trouvant dans la chambre de logement de matière (35, 38) dans le passage de décharge de matière (6).

15. Vanne rotative verticale suivant la revendication 14, caractérisée en ce que le passage d'entrée de milieu (103) est prévu dans la partie supérieure (21) du logement de vanne (2), et en ce que l'élément de joint supérieur en forme de plaque (7) comporte un trou de communication (109) permettant d'amener l'ouverture supérieure susdite (36) de la chambre de logement de matière (35, 38) dans le cas de sa localisation dans la seconde position susdite (b), en communication avec le passage d'entrée de milieu (103).

16. Vanne rotative verticale suivant la revendication 15, caractérisée en ce qu'elle comprend en outre un élément formant chicane (310) disposé dans le passage d'entrée de milieu (103) pour réduire ainsi l'aire du parcours de circulation de ce passage d'entrée de milieu (103).

17. Vanne rotative verticale suivant la revendication 15, caractérisée en ce qu'elle comprend en outre un élément (410) générateur de circulation tourbillonnante et disposé dans le passage d'entrée de milieu susdit (103) pour amener ainsi une circulation du milieu introduit dans le passage d'entrée de milieu (103) à tourbillonner.

# F I G. 1

FIG. 2

FIG. 4

FIG. 3

FIG. 7

FIG. 6

FIG. 5

FIG. 8

FIG. 9

FIG. 10

F I G. 11

F I G. 15

EP 0 170 239 B1

# FIG. 12

F I G. 13

F I G. 14

F I G. 16

F I G. 17

6